# EUROPÄISCHE PATENTSCHRIFT

(11) **EP 0 884 604 B1**
(45) Veröffentlichungstag und Bekanntmachung des Hinweises auf die Patenterteilung: **09.04.2003**
(21) Anmeldenummer: 98110517.4
(22) Anmeldetag: 09.06.1998
(51) Int. Cl.: G01S 13/34

(54) **Wecksensor, insbesondere für eine Zielverfolgungseinrichtung**
Warning sensor, especially for a target tracking device
Capteur d'alerte, partieculièrement pour un dispositif de poursuite de cible

(30) Priorität: 12.06.1997 DE 19724773
(43) Veröffentlichungstag der Anmeldung: 16.12.1998
(73) Patentinhaber: Diehl Stiftung & Co., 90478 Nürnberg (DE)
(72) Erfinder: Koch, Volker, 90607 Rückersdorf (DE)

(56) Entgegenhaltungen:
- EP-A- 0 223 949
- EP-A- 0 714 035
- US-A- 4 220 952
- US-A- 4 896 160
- US-A- 5 361 069

## Beschreibung

Die Erfindung betrifft einen Radar-Detektor gemäß dem Oberbegriff des Anspruches 1.

Ein derartiger Radar-Detektor ist aus der EP 0 223 949 A1 bei einer Einrichtung zum Erfassen, Verfolgen und Abwehren von Flugobjekten mittels mobiler, jeweils mit einer Fahrzeugnavigationsanlage und mit einem Zielverfolgungs-Tracker ausgestatteter Waffensysteme als zentrales Luftlage-Überwachungsradar bekannt. Solch ein Überwachungsradar ist ein weitreichendes Rundsuchradar, das bei der Zielzuweisung an eines der Waffensysteme seine Zieldaten übermittelt, die aber für die Zielaufschaltung noch auf die jeweiligen Standortdaten transformiert werden müssen. Abweichungen zwischen den vom Rundsuchradar gewonnenen und den vom Verfolgungsradar des Waffensystems gewonnenen Zieldaten, die aufgrund von Ungenauigkeiten in der Arbeitsweise der Fahrzeugnavigationsanlage unvermeidlich sind, werden dann als Korrekturwerte bei der Zielverfolgung berücksichtigt.

Problematisch beim Einsatz eines solchen Systems ist nicht nur der Aufwand für den Abgleich der Zieldaten, sondern insbesondere die hohe Verratswahrscheinlichkeit, weil das abzuwehrende Objekt gleich von zwei aktiven Radareinrichtungen (gleichzeitig oder jedenfalls unmittelbar nacheinander) erfaßt wird. Die Radarabwehr wirkt dadurch als kooperatives Ziel, nämlich als Zieleinweisung für den eigentlich abzuwehrenden Angreifer. Insbesondere das über große Entfernungen arbeitende Luftlage-Überwachungsradar ist wegen seiner hohen Verratswahrscheinlichkeit dem Angriff durch darauf optimierte Antiradar-Flugkörper ausgesetzt.

Um solchen Eigenverrat zu verringern, ist es bekannt, zunächst mit passiven (also keine Energie abstrahlenden) Detektoren als Wecksensor für eine später erst zu aktivierende Zielverfolgungseinrichtung zu arbeiten. Da aber ein abzuwehrender Flugkörper nicht die ausgeprägte Signatur etwa eines abzuwehrenden Kampfhubschraubers aufweist und sich wesentlich schneller als jener dem gefährdeten, zu schützenden Objekt annähert, kann ein System mit passiven Wecksensoren nicht ohne weiteres erfolgversprechend zur Flugkörperabwehr eingesetzt werden.

Die Eigenverrats-Gefahr ist auch bei einem passiven bistatischen Radarsystem vermieden, wie es in der US 5,424,744 beschrieben ist: Der Weckvorgang wird dort dadurch initiiert, daß die momentane Empfangsverbindung von einem potentiell bedrohten Objekt wie insbesondere einem Luftfahrzeug zu einem ständig sendenden Satelliten, insbesondere zu einem niedrig über dem Horizont stehenden Navigationssatelliten, wenigstens vorübergehend signifikant gestört wird, weil ein das Objekt angreifender Flugkörper diese Funkverbindungs-Richtung kreuzt und dadurch Reflexionen bzw. Abschattungen hervorruft. Obgleich das zu schützende Objekt zur Positionsbestimmung ständig wenigstens vier unterschiedlich positionierte Satelliten empfängt, sind darunter doch stets auch einige, die momentan nicht in der günstigen horizontnahen Position stehen bzw. deren Relativposition in Bezug auf das gefährdete Objekt, was eine signifikante Störung der Funkverbindung betrifft, angesichts des großen Abstandes zum Objekt ungünstig ist hinsichtlich der Annäherungsrichtung des angreifenden Flugkörpers. Das führt insbesondere dann zu Beobachtungslücken und damit zu Bedrohungssituationen aus wechselnden, nicht vorherbestimmbaren Richtungen, wenn ein Angreifer vom zu schützenden Objekt aus auf möglichst große Distanz erfaßt werden soll, um die Abwehrmittel rechtzeitig einsatzbereit machen zu können.

In Erkenntnis dieser Gegebenheiten liegt vorliegender Erfindung die Aufgabe zugrunde, einen möglichst die gesamte Hemisphäre um das zu schützende Objekt, aber auch möglichst eigenverratsfreien, Wecksensor, insbesondere zum Aufschalten eines Trakkers auf einen angreifenden Flugkörper, zu schaffen.

Diese Aufgabe ist erfindungsgemäß dadurch gelöst, daß die wesentlichen Merkmale gemäß dem Hauptanspruch realisiert werden.

Jener Lösung zufolge ist als Wecksensor ein bei dem zu schützenden Objekt, das stationär oder ein Wasser-, Land- oder Luftfahrzeug sein kann, oder unmittelbar an diesem Objekt angebrachter aktiver (Radar-)Detektor vorgesehen, der im Dauerstrich-Betrieb rauschkodierte Sendeenergie mit spektral gespreiztem, also energetisch reduziertem Träger (ein sogenanntes Spread-Spektrum) - mit unterschiedlicher Pseudorauschkodierung - in gegeneinander verschwenkte Raumsektoren abstrahlt. Die Reflexionen dieser Sendeenergie an einem sich annähernden Flugkörper werden im Wecksensor von einem mit dem Sender synchronisierten Empfänger aufgenommen und hinsichtlich Entfernung und Annäherungsgeschwindigkeit (Doppler) ausgewertet. Es können auch mehrere derartige Wecksensoren, beispielsweise an verschiedenen zu schützenden Objekten angebracht, in räumlicher Nähe betrieben werden, wenn ihre Sendeenergien über individuelle Pseudorauschcodes voneinander entkoppelt sind, also die Reflexionen getrennt ausgewertet werden können.

Solch ein Sender, wie er beispielsweise in der EP 0 714 035 A1 zur Ermittlung von Abstand und Relativgeschwindigkeit in der Kraftfahrzeugverkehrstechnik beschrieben ist, ist infolge seiner energetisch reduzierten Rauschsignales praktisch nicht aufklärbar, zumal sein Spread-Spektrum demjenigen entspricht, das praktisch überall als Abstrahlung der Navigationssatelliten gegenwärtig ist.

Das CW-Pseudorauschsignal wird - richtungscodiert - in einander benachbarte Raumsektoren abgestrahlt, um dadurch die Hemisphäre abzuscannen und so zugleich mit der Weckinformation auch eine Richtungsinformation über den momentanen Standort des erfaßten potentiellen Angreifers als dem abzuwehrenden Ziel zu gewinnen. Letzteres fördert die Richtungseinweisung zum Aufschalten der Tracker-Sensorik auf das Ziel. Es kann aber der Wecksensor auch selbst als Tracksensor für das einmal aufgefaßte Ziel dienen.

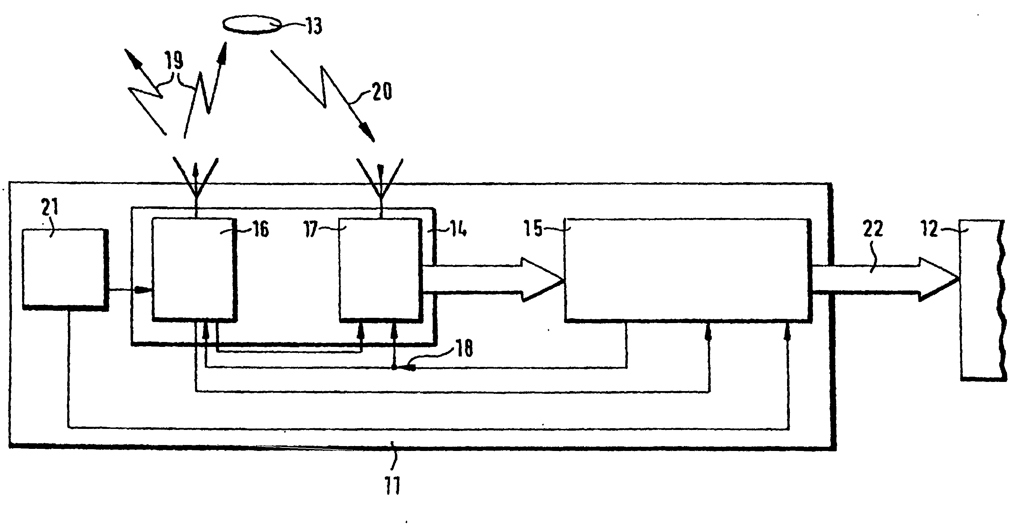

Zusätzliche Alternativen und weitere Vorteile der Erfindung ergeben sich aus den weiteren Ansprüchen und aus nachstehender Beschreibung eines in der Zeichnung unter Beschränkung auf das Wesentliche blockschaltmäßig abstrahiert skizzierten bevorzugten Realisierungsbeispiels zur erfindungsgemäßen Lösung. Die einzige Figur der Zeichnung zeigt die Gewinnung eines Wecksignales mittels einer nicht-aufklärbaren Dauerstrich-Radarabstrahlung gemäß vorliegender Erfindung.

Der Wecksensor 11 zum Aktivieren eines Ziel-Trackers 12 bei Annäherung eines abzuwehrenden Zieles 13, insbesondere in Form eines zielsuchenden Flugkörpers, ist mit einem aktiven Radar-Detektor 14 ausgestattet. Ein Prozessor 15 steuert dessen Sender 16 zur Abstrahlung eines an sich schmalbandigen aber zur Reduzierung der spektralen Energie (und damit der Verratswahrscheinlichkeit) über einen großen Frequenzbereich verbreiterten, pseudorauschmodulierten Trägers. Hinsichtlich der Sende- und Empfangs-Technik mit gespreiztem Spektrum wird Bezug genommen auf das Standardwerk "SPREAD SPECTRUM SYSTEMS with commercial applications" von R. C. Dixon im Verlag John Wiley & Sons, Inc. Für die Funktion vorliegenden Wecksensors erfolgt die Abstrahlung codiert in bestimmte, insbesondere aufeinanderfolgende, Raumsektoren; wobei die Codierung bevorzugt in ebenfalls vom Prozessor 15 bestimmten Pseudo-Rauschcodes liegt, die sich von Sektor zu Sektor signifikant unterscheiden. Vom Prozessor 15 werden an den Empfänger 17 die korrespondierenden Steuersignale 18, mit den Informationen über die spektrale Spreizung und über den aktuellen Pseudorauschkode, geliefert. So kann im Wecksensor 11 der Anteil der Sendeenergie 19, der am Ziel 13 zur Empfangsenergie 20 reflektiert wird, durch Rückgängigmachen der Spreizung wieder auf den energetisch ergiebigeren schmalen Frequenzbereich rückgeführt werden, unter gleichzeitiger Reduzierung der Energie eines in der Empfangsenergie 20 möglicherweise enthaltenen schmalbandigen Störsignales. Außerdem wird im Prozessor 15 eine Kreuzkorrelation zwischen der Sendeenergie 19 und der Empfangsenergie 20 mit den aktuell vorgegebenen Pseudozufallscodes gebildet. Ein Taktgeber 21 synchronisiert dabei die Codierung der abgestrahlten Sendeenergie 19 und der Verarbeitung der den gleichen Kode beinhaltenden Empfangsenergie 20 für die Korrelationsauswertung im Prozessor 15, während der Empfänger 17 in aus der Radartechnik bekannter Weise vom Sender 16 direkt synchronisiert wird.

Wenn die Korrelationsanalyse im Prozessor 15 unter Anwendung des sendeseitig vorgegebenen Pseudorauschcodes einen vorgegebenen Grenzwert übersteigt, wenn also mit hinreichender Zuverlässigkeit die Empfangsenergie 20 am Ziel 13 reflektierte Sendeenergie 19 enthält, dann liefert der Wecksensor 11 ein Wecksignal 22 an den Trakker 12. Das beinhaltet einerseits den Einschaltbefehl und andererseits - nämlich über die Korrelation mit dem bekannten Pseudorauschcode - eine Entfernungsinformation sowie eine Doppler- (also Geschwindigkeits-)Information für das Aufschalten der Zielverfolgungssensorik des Trackers 12 auf die Bewegung des Zieles 13.

Erfindungsgemäß wird also ein pseudorauschmoduliertes Spread-Spektrum - durch unterschiedliche Modulation codiert, in gegeneinander versetzte Raumsektoren - abgestrahlt und die nach Reflexion an einem potentiellen Ziel 13 empfangene Energie 20 unter Verwendung des senderseitig vorgegebenen Pseudorauschcodes kreuzkorreliert, um eine ständige aber hinsichtlich ihrer Herkunft nicht lokalisierbare sphärische Überwachung zur Warnung insbesondere von See-, Landund Luftfahrzeugen gegen einen angreifenden Lenkflugkörper als dem abzuwehrenden Ziel 13 zu erreichen und mit dem Wecksignal aus dem Korrelationsprodukt gewonnene Entfernungs- und Geschwindigkeitsinformationen an einen Zieltracker 12 übergeben zu können, wenn dieser Wecksensor 11 nicht selbst auch als Tracksensor Einsatz findet.

## Patentansprüche

1. Radar-Detektor (14) als Wecksensor (11) zum Aktivieren eines Zielverfolgungs-Trackers (12) bei Annäherung eines potentiell zu bekämpfenden Zieles (13), insbesondere eines ein Land- oder Seefahrzeug ansteuernden und abzuwehrenden Flugkörpers,
**dadurch gekennzeichnet,**
**daß** der Radar-Detektor (14) mit einem Sender (16) ausgestattet ist, der Sendeenergie (19) in Form eines schmalbandigen aber über einen großen Frequenzbereich aufgeweiteten und mit unterschiedlichen Pseudorauschkodes, die sich signifikant voneinander unterscheiden, modulierten Trägers in unterschiedliche Raumsektoren abstrahlt, deren am potentiellen Ziel (13) reflektierte Empfangsenergie (20) über einen mit dem Sender (16) synchronisierten Empfänger (17) wieder in einen schmalen Frequenzbereich überführt und unter Anwendung des sendeseitig vorgegebenen Pseudorauschkodes mit der Sendeenergie (19) kreuzkorreliert wird, um das Wecksignal (22) für das Aktivieren des Trackers (12) zu liefern.

2. Radar-Detektor nach Anspruch 1,
**dadurch gekennzeichnet,**
**daß** die Sendeenergie (19) mit unterschiedlichen Pseudorauschkodes in einander benachbarte Raumsektoren abgestrahlt wird.

3. Radar-Detektor nach einem der vorangehenden Ansprüche,
**dadurch gekennzeichnet,**
**daß** sein an den Zielverfolgungs-Tracker (12) geliefertes Wecksignal (22) einen Einschaltbefehl und aus der Kreuzkorrelation mit dem sendeseitig vorgegebenen Pseudorauschkode gewonnene Entfernungs- und Dopplerinformationen beinhaltet.

4. Radar-Detektor nach Anspruch 3,
**dadurch gekennzeichnet,**
**daß** sein Wecksignal (22) auch eine Richtungsinformation über den momentanen Standort des Zieles (13) enthält.

5. Radar-Detektor nach einem der vorangehenden Ansprüche,
**dadurch gekennzeichnet,**
**daß** er in räumlicher Nähe eines anderen solchen Radar-Detektors über seinen individuellen Pseudorauschkode von jenem entkoppelt betreibbar ist.

6. Radar-Detektor nach einem der vorangehenden Ansprüche,
**dadurch gekennzeichnet,**
**daß** er selbst auch als Zielverfolgungs-Tracker eingesetzt ist.

## Claims

1. A radar detector (14) as an alarm sensor (11) for activating a target tracker (12) upon the approach of a target (13) potentially needing to be neutralized, in particular a missile heading for a land vehicle or sea vessel and calling for defensive action,
**characterized in that**
the radar detector (14) is fitted with a transmitter (16), which radiates transmitted energy (19) into different spatial sectors, said transmitted energy (19) taking the form of a carrier which is narrow band but expanded over a wide frequency range and is modulated with different pseudo-noise codes which differ significantly from one another, the received energy (20) of which, reflected at the potential target (13), is converted into a narrow frequency range again by way of a receiver (17) synchronized with the transmitter (16) and, using the pseudo-noise code which is predetermined at the transmitter end, is cross-correlated with the transmitted energy (19) in order to deliver the alarm signal (22) for activation of the tracker (12).

2. A radar detector according to Claim 1,
**characterized in that**
the transmitted energy (19) is radiated with different pseudo-noise codes into adjoining spatial sectors.

3. A radar detector according to one of the preceding claims,
**characterized in that**
its alarm signal (22) transmitted to the target tracker (12) contains a switch-on command and distance and Doppler information derived from the cross-correlation with the pseudo-noise code predetermined at the transmitter end.

4. A radar detector according to Claim 3,
**characterized in that**
its alarm signal (22) also contains directional information as to the instantaneous position of the target (13).

5. A radar detector according to one of the preceding claims,
**characterized in that**,
by way of its individual pseudo-noise code, it can be operated in the spatial vicinity of another such radar detector in such a way as to be decoupled from it.

6. A radar detector according to one of the preceding claims,
**characterized in that**
it is itself also used as target tracker.

## Revendications

1. Détecteur à radar (14) servant de capteur de réveil (11) pour activer un traqueur de poursuite de cible (12) à l'approche d'une cible (13) potentielle à attaquer, en particulier d'un missile commandant et défendant un véhicule terrestre ou marin, **caractérisé en ce que** le détecteur à radar (14) est équipé d'un émetteur (16) qui rayonne une énergie d'émission (19) sous la forme d'une porteuse modulée à bande étroite mais étalée sur une grande gamme de fréquences et avec différents codes de pseudo-bruit qui diffèrent les uns des autres de manière significative, dans différents secteurs de l'espace, dont l'énergie de réception (20) réfléchie sur la cible (13) potentielle est transformée à nouveau en une gamme étroite de fréquences, au moyen d'un récepteur (17) synchronisé avec l'émetteur (16), et est corrélée de manière croisée avec l'énergie d'émission (19) par utilisation du code de pseudo-bruit prédéfini côté émission, afin de fournir le signal de réveil (22) pour l'activation du traqueur (12).

2. Détecteur à radar selon la revendication 1, **caractérisé en ce que** l'énergie d'émission (19) est émise avec différents codes de pseudo-bruit dans des secteurs de l'espace voisins les uns des autres.

3. Détecteur à radar selon l'une des revendications précédentes, **caractérisé en ce que** son signal de réveil (22), fourni au traqueur de poursuite (12), contient une instruction de mise en marche et des informations de distance et informations doppler obtenues à partir de la corrélation croisée avec le code de pseudo-bruit prédéfini côté émission.

4. Détecteur à radar selon la revendication 3, **caractérisé en ce que** son signal de réveil (22) contient aussi une information de direction concernant l'emplacement momentané de la cible (13).

5. Détecteur à radar selon l'une des revendications précédentes, **caractérisé en ce qu'**il peut fonctionner à proximité spatiale d'un autre détecteur à radar de ce type par son code individuel de pseudo-bruit, désaccouplé de celui-ci.

6. Détecteur à radar selon l'une des revendications précédentes, **caractérisé en ce qu'**il est utilisé lui-même aussi comme traqueur de poursuite de cible.
